# EUROPEAN PATENT SPECIFICATION

(11) **EP 1 431 950 B1**
(45) Date of publication and mention of the grant of the patent: **22.08.2007**
(21) Application number: 02080626.1
(22) Date of filing: 19.12.2002
(51) Int. Cl.: G09F 9/302

(54) **Display with improved readability**
Anzeigevorrichtung mit verbesserter Ablesbarkeit
Afficheur à lisibilité améliorée

(43) Date of publication of application: 23.06.2004
(73) Proprietor: KAMSTRUP A/S, 8660 Skanderborg (DK)
(72) Inventor: Jensen, Allan Sogaard, 8464 Galten (DK); Lang, Soren, 8220 Braband (DK)
(74) Representative: Plougmann & Vingtoft A/S

(56) References cited:
- DE-A- 3 821 202
- GB-A- 2 235 325
- US-A- 5 686 831

## Description

### FIELD OF THE INVENTION

The present invention relates to the technical field of display units for displaying information. More particularly, the invention relates to display units for displaying data from a measurement apparatus.

### BACKGROUND OF THE INVENTION

For a large number of applications, display units mounted on an apparatus are used for presenting data related to the function of the apparatus. Among other parameters, the readability of such displays depends on the orientation of the display relative to a user. For large apparatuses with a fixed position, a user may need to operate the apparatus in different positions. In such cases the use of a single display unit may give rise to problems with readability, either if the distance from the user to the single display is too large, or if the user is oriented so that readability is otherwise difficult, or it is simply impossible for the user to read the displayed information. Most often in such cases more than one display is used, or the single display can be mounted by use of mechanical devices so that the display can be moved in a manner enabling the user to read the displayed information from different positions.

For smaller apparatuses the display is often integrated into the apparatus, and problems with reading data on the display may arise in situations where the apparatus must be oriented specifically in order to function properly. Examples of such apparatuses are measurement instruments. For instance handheld measurement instruments may sometimes be used in positions where they need to be rotated or tilted in order to be in contact with the measurement object, thus making it uncomfortable or even impossible to read the display for the user. Small measurement apparatus for stationary use may need to be mounted in different ways for different applications. For instance, a measurement apparatus with an integrated display intended for measuring a flow in a pipe needs to be mounted according to a flow direction in the pipe. Therefore, in general, such apparatus can be expected to be mounted in at least four different orientations in case of substantially vertical and horizontal piping. Consequently, if a user standing on the ground has to read the display, the information may be displayed in an, for the user, uncomfortable orientation, and in some cases the displayed information is even upside down relative to the user.

Solving this problem can be done, as described also for larger apparatuses, by mounting the display unit on a mechanical device so the display in some way can be moved, such as tilted or rotated, relative to the apparatus. Alternatively, the measurement apparatus must be divided into two or more separate units such as one or more transducer units and a central unit comprising the display. With such solution the display unit can be positioned freely, thus enabling an orientation relative to the user in which readability of displayed information is facilitated. Disadvantages of the mentioned solutions are that the apparatus becomes more bulky and more expensive to produce.

DE 38 21 202 discloses an apparatus, such as plug-in wall socket timer, comprising a digital display on the front side of the apparatus. The digital display is integrated In a disk having a window for the display. The disk is mounted In the apparatus and is rotatable between two position stops so that the display can be positioned in a normal position in each of the utilisation positions of the apparatus.

US 5686831 discloses a gauge including a probe for taking measurements, a microprocessor for processing the measurements taken by the probe; and a screen display for displaying the measurements processed by the microprocessor; wherein the screen display can be selectively operated in a first hand-held mode wherein the measurements are displayed on the screen display in a first orientation, and in a second desk-top mode wherein the measurements are displayed on the screen display in a second orientation.

### SUMMARY OF THE INVENTION

An object of the present invention may be seen as providing a measurement apparatus adapted for fixed mounting having a display unit intended for use within measurement applications where the display can be easily read by a user with an arbitrary rotation relative to the display. It must be possible to mount the display unit on apparatuses without making them bulky and increase the production cost significantly.

According to a first aspect of the present invention the object is complied with by providing:
a measurement apparatus adapted for fixed mounting, the measurement apparatus comprising a display unit comprising a display screen, the display screen comprising regions for displaying at least a first and a second predefined set of characters representing values measured by the measurement apparatus, the first and the second predefined set of characters being oriented differently relative to the display screen, and having a fixed orientation therebetween, wherein the fixed orientation between the first and second predefined sets of characters is determined at least by a rotation angle α1.

By providing a measurement apparatus adapted for fixed mounting having a display unit capable of displaying at least a measured value orientated differently relative to the display screen it is possible to increase readability of the display even though the display unit is mounted fixed in relation to the measurement apparatus.

The phrase "set of characters" is defined as any set of displayable symbols. Characters may be letters, digits, and special symbols such as those comprised in the ASCII set of characters. However, a character can also be a much more complicated symbol than those defined in the ASCII set of characters. Such symbols can be application specific symbols related to the function of the apparatus, such as symbols indicating an active mode or indicating one among other possible measurement objects etc. These symbols may either be simple bars and dots, but they may also comprise much more detailed drawings or sketches and company logos etc.

The measurement apparatus adapted for fixed mounting having a display unit according to the first aspect of the invention may have a display screen comprising regions for displaying at least a first and a second predefined set of characters with a fixed orientation therebetween. The fixed orientation between the first and second predefined sets of characters may be determined at least by a rotation angle α1. The phrase "angle" indicates an angle being positive clockwise. The rotation angle α1 is preferably within the interval 150°-210°, and α1 may be substantially equal to 180°.

The display screen may further comprise a region for displaying a third predefined set of characters with a fixed orientation relative to the first and the second predefined set of characters, and wherein the third predefined set of characters is rotated an angle α3 relative to the second predefined set of characters. The rotation angles α1 and α2 are preferably within the interval 100°-140°, and α1 and α2 may be substantially equal to 120°.

The display screen may further comprise a region for displaying a fourth predefined set of characters with a fixed orientation relative to the first, the second and the third predefined set of characters, and wherein the fourth predefined set of characters is rotated an angle α3 relative to the third predefined set of characters. The rotation angles α1, α2, and α3 are preferably within the interval 70°-110°, and α1, α2 and α3 may be substantially equal to 90°.

The predefined sets of characters may be substantially identical. The regions for displaying predefined sets of characters may spatially overlap. The display screen is selected from the group consisting of: Thin Film Transistor (TFT), Cathode Ray Tube (CRT), Liquid Crystal Display (LCD), Light Emitting Diode (LED), Organic Light Emissive Diode (OLED), Light Emitting Polymer (LEP), Field Emitting Display (FED) and Plasma.

The display screen may further comprise at least one touch sensible zone adapted for sensing a user input. The at least one touch sensible zone serves as input for selecting between the at least first or second orientations.

The measurement apparatus may be adapted to measure flow velocities, and the measured flow velocities may be used for determination of energy consumption, wherein the energy consumption may be heat.

### BRIEF DESCRIPTION OF DRAWINGS

A more detailed description of the invention and preferred embodiments is given below with reference to the accompanying figures, in which
figure 1 shows an example of a display screen for a measurement apparatus for measuring energy consumption in a district heating system,
figure 2 shows examples of measurement instruments for measurement of consumed energy in district heating systems with the display screen from figure 1 integrated,
figure 3 shows examples of display screens capable of showing a set of characters with three and four different orientations,
figure 4 shows three examples of display screens with shapes different from rectangular, and
figure 5 shows examples of a circular display including pseudo-analogue graphical symbols.

While the invention is susceptible to various modifications and alternative forms, specific embodiments have been shown by way of example in the drawings and will be described in detail herein. It should be understood, however, that the invention is not intended to be limited to the particular forms disclosed. Rather, the invention is to cover all modifications, equivalents, and alternatives falling within the spirit and scope of the invention as defined by the appended claims.

### DETAILED DESCRIPTION OF THE INVENTION

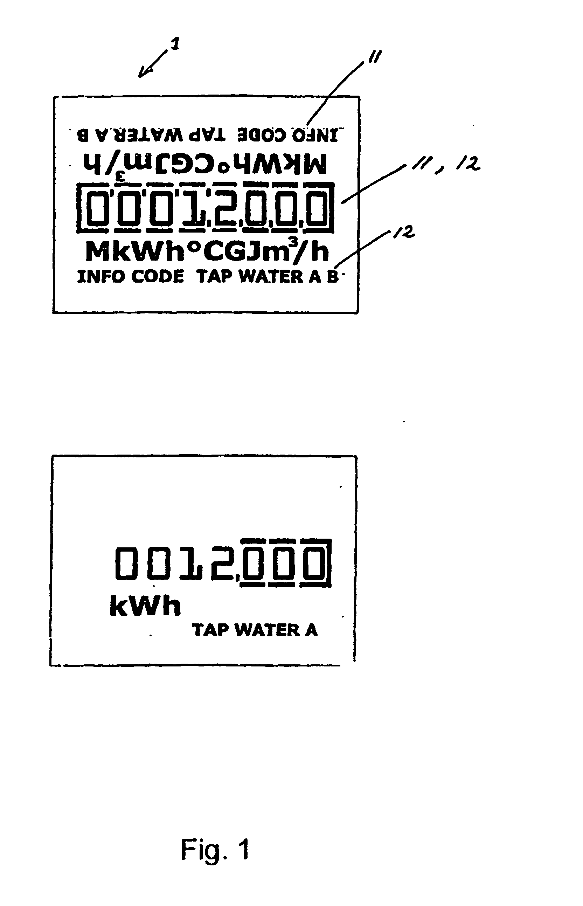

Figure 1, upper part, shows a display according to the first aspect of the present invention. The shown LCD display screen with predefined characters is intended for use in connection with a measurement apparatus for domestic use for measuring consumed heating energy supplied by a district heating supply system. The upper part of figure 1 shows all predefined characters which the display screen is adapted to display. As seen, the display screen comprises two regions each being capable of displaying two sets of characters rotated 180° relative to each other, thus making it equally readable if turned upside down. The two regions spatially overlap in the central part of the display screen. The central part, thus forming a common part of the two sets of characters, is adapted to show digits and decimal points. Thus, in the central part a figure representing a measured value can be displayed. The region adapted for displaying the measured value is composed of display segments which are capable of forming digits with an arbitrary shape equally well readable at rotations of 0° and 180°. The central part also includes bar symbols used for indicating the active mode or state of the measurement apparatus. The fact that part of the display region is common for the two sets of characters helps reducing the overall size of the display screen. The display region further comprises predefined characters for showing the unit of measure, such as: kWh, MWh, GJ, WH, kW, °C, kWh, m³, m³/h, h. In addition it has a line for showing information in relation to the parameter shown: info, code, tap, water, A, B. Thus, the display screen is capable of displaying measured temperatures, flows and energy.

Figure 1, bottom part, shows an example of a display image where only parts of the predefined characters of one of the two sets of characters are active.

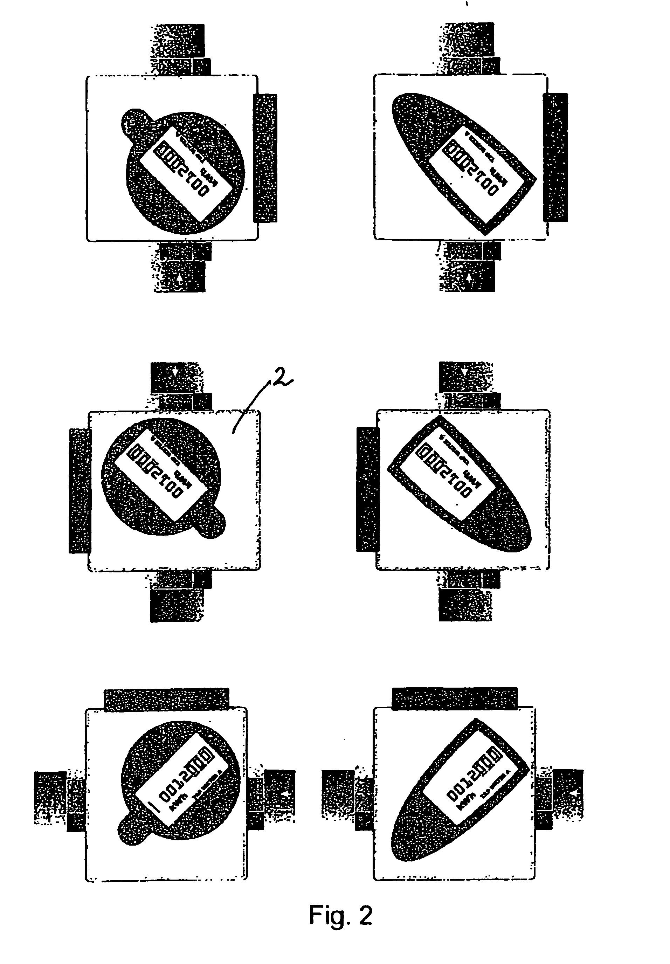

Figure 2 shows two different versions of a measurement apparatus intended for measuring consumed energy supplied by a district heating supply system. Determining the consumed amount of heat energy supplied with such a system requires measurement of flow of heated water and measurement of input and output temperature of the heated water supplied. The measurement apparatus shown in figure 2 is very compact. The reason for this being that a measurement unit of the apparatus is integrated with both a calculating unit and a display unit. Hereby, only sensors for sensing input an output temperatures are necessary external to the apparatus. However, such apparatus must be adapted for mounting in different orientations, since the flow unit to be mounted on the piping requires flow in a specific direction. Therefore, in general, with two possible flow directions in a pipe and possible vertical and horizontal pipes, the measurement apparatus can be mounted at angles 0°, 90°, 180° and 270° relative to horizontal. Figure 2 shows the apparatus mounted in three of these orientations. The flow directions are indicated with arrows on the pipes.

Applying the principles of the present invention it is possible to combine a full integration of the units for measuring flow, calculating and displaying data with a high degree of readability of the displayed information. The display unit used is the one shown in figure 1 with two sets of characters rotated 180° relative to each other. For further improving readability in all four possible orientations of the measurement apparatus, the display unit is mounted at an angle of 45° relative to horizontal. In this way it is possible for a person standing to read the displayed information independent of the orientation of the measurement apparatus, and still with a large degree of comfort. This is illustrated in figure 2 showing three of the possible four ways the measurement apparatus can be oriented. As it is seen, using the possibility of selecting one of the two sets of characters as active, it is comfortable and easy to read the display for a standing person with all mounting orientations, since the displayed information is never rotated more than ±45° relative to horizontal direction.

Switching or toggling between the sets of characters, and in this way choosing a preferred orientation of the display information, may be performed by means of a button positioned on the housing of the measurement apparatus, for instance on the front of the housing, such as close to the display unit, or it may be formed an integral part of the display unit.

The button could be a push button or a touch button being very sensitive to even a light touch of a finger.

The toggling between the two or more sets of characters for selecting the one set to be displayed may be performed by a short activation of the button so as to activate the next set of characters in a predefined order. The button may also have other functions than operating the orientation of the displayed information. It may be a multifunction button for operating other functions of the measurement apparatus - such as selecting the parameter to be displayed, selecting measurement range, or controlling a menu based operating system etc. In the example of figure 2 a round button positioned next to the display unit, within the shaded area, may be used to toggle between temperatures, flow and consumed heating energy. In such a case a one button design may be implemented so that by pressing the button shortly implies a new measured value to appear on the display, whereas a pressing the button for a longer period, say 5 seconds, will toggle the display orientation.

An easy accessible control means may be preferred especially in case of handheld instruments or instruments that may be operated from rapidly changing positions. A preferred type of push button for field measurement instruments is a type that can be placed behind a cover sheet or folio so as to give the instrument a smooth surface which will make is resistant to humidity and dirt. However, in some cases the preferred display direction could be selected also by means of a knob.

In case of stationary mounted equipment, such as for example the embodiment shown in figure 2, the toggling control may also be provided on the front, thereby enabling the user to choose the preferred display direction. However, another possibility is that the active set of characters may is chosen by the manufacturer by means of the programming software of the apparatus, or it may be pre-set by an internal switch or jumper. In the example of figure 2 a consumer could order the measurement apparatus for installation with an orientation of a specific rotation, and the manufacturer could deliver a version with a correspondingly pre-set orientation of the display. Compared to a production covering four physically separate versions of the apparatus differing only by the orientation of the display unit the production is significantly rationalised.

Saving space on a display unit can be obtained by grouping symbols, such as warning symbols or general symbols for attracting the user's attention, such symbols may be common for a number of orientations or even every possible orientation. Rotation symmetrical symbols may be used for this purpose - for instance a circle, a filled circle or any symbol rotating and flashing simultaneously. Of course, such common parts of the display that can be read from all orientations relative to the display may not need to be switched along with the remaining part of a set of characters when another orientation for best possible readability is desired.

A display unit according to the present invention may be implemented with display screens of a large variety of display screen types. The screen technology can be selected among a large number of available technologies such as: Thin Film Transistor (TFT), Cathode Ray Tube (CRT), Liquid Crystal Display (LCD), Light Emitting Diode (LED), Organic Light Emissive Diode (OLED), Light Emitting Polymer (LEP), Field Emitting Display (FED) or Plasma.

Some of the above mentioned technologies are primarily suited for specific applications since it is possible to implement very dedicated displays with predefined characters. LCD and LED display types are suited for such dedicated displays being able to show only a limited number of predefined characters being defined by structures of the display screen. Even though only a limited number of predefined characters are available, it may be possible to cover the information required for many applications since special symbols can be predefined. It is also possible to make up simple graphs by a limited number of predefined symbols. In case of measurement equipment, a typical minimum amount of information is: a number representing the measured value, an identification of the measurement type, and a unit of measurement. Both the data value and the indication of the measurement type and to where it relates may be accompanied by a graphic information. A special symbol may indicate the measurement type, and the measured data value may be displayed as a bar graph or a "pseudo analogue" display comprising some type of pointer and a scale which for some applications offers a facilitated and fast reading compared to presenting the value with digits only.

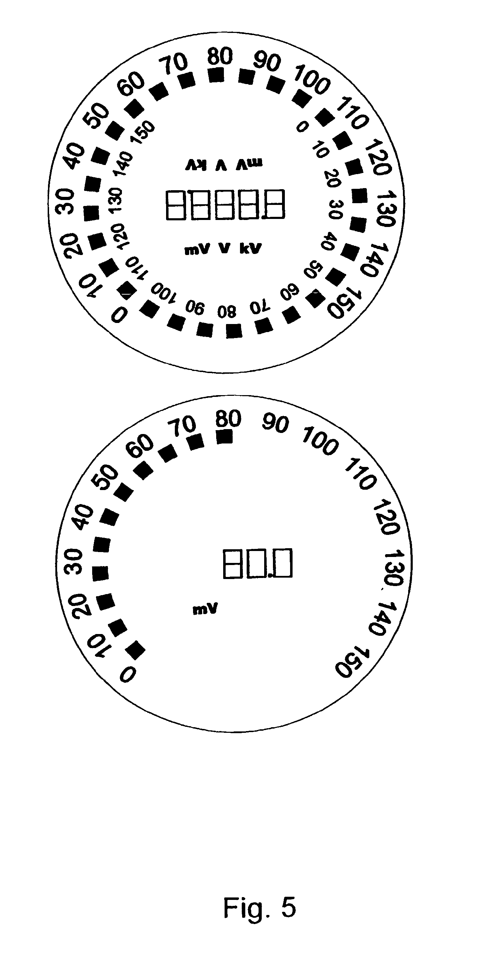

Upper part of figure 5 shows a layout of a display screen with two predefined sets of characters adapted to display a voltage in the range 0-150 with a measurement unit being mV, V or kV. The round shape allows a "pseudo analogue" graphical support of the measured value which is displayed as digits in the central part of the display. The two sets of characters are rotated 180° relative to each other. The graphical segments of the display are common for both sets of characters. Lower part of figure 5 shows an example of the display showing measurement value 80.0 mV.

An advantage of using a dedicated display with predefined is that the electronic means for controlling the display can be quite simple. The reason is that the only requirement for displaying a desired character is to select it among the predefined characters. In contrast a more generally applicable display screen requires more advanced control systems, comprising for instance memory for storing one more set of characters, together with more advanced control systems for determining the orientation on the display screen etc.

Therefore, for large production series application specific screens have the advantage of low production cost due to a low complexity of the electronics for controlling the display unit.

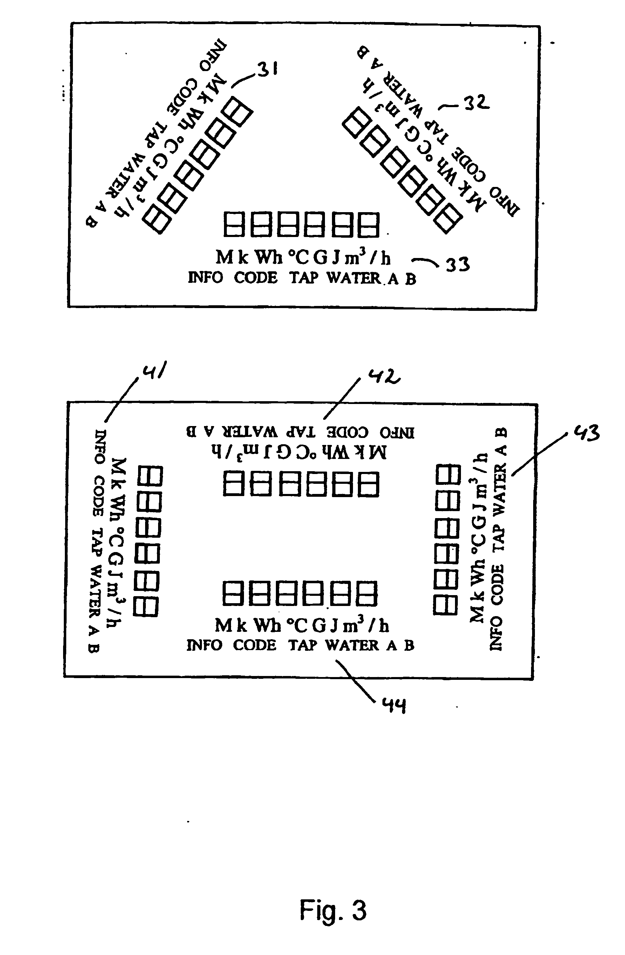

Display screens with predefined characters can of course in principle be produced with any number of character sets having any desired rotation angle relative to the display screen. Figure 1 shows a quite simple case of two sets of characters being rotated 180° relative to each other. Three sets of characters can be positioned so as to form steps of 120° rotation between each, and with four sets of characters it is possible to obtain an angular resolution of 90° which in many cases will give an acceptable readability independent of the rotation of the apparatus on which the display is attached. Figure 3 shows two such examples with three and four sets of characters respectively. The method of evenly distribute the available predefined sets of characters with respect to rotation angle provides a good compromise with respect to readability for cases where the user is supposed to be arbitrarily oriented in relation to the display screen. However, for cases where it is known that certain orientations of the user relative to the display screen will occur more often than others, or it is evident that certain orientations will never occur, the rotation angles may be chosen unevenly so as to provide the best readability in the most frequently occurring situations. As an example, it may be known that an apparatus with a display unit attached will never be used upside down relative to a user. For such a case a rectangular display screen with two predefined sets of characters may be produced so that the two sets of characters are oriented with rotation angles ±45° relative to the display screen.

Alternative to display screens with predefined sets of characters standard low cost dot-matrix displays are available, typically using LCD or LED technique. Such displays produce an image by activating a number of dots forming a matrix. These displays can be found with different resolutions and sized. Very small displays with poor resolution are available, thus enabling only a rough image of a simple set of characters comprising a few letters and/or digits, which may be sufficient for a number of applications.

However, in relation to the present invention, even displays with low resolution can be used as part of a display unit as long as the resolution is high enough to display a desired character with at least two different orientations, and wherein the different orientations comprise rotation. For example a simple 8x40 dot-matrix display screen can be used to display low resolution letters and digits in two ways: one without rotation and one where the characters are displayed upside down - e.g. rotated 180°. If in addition, the display unit is mounted on or integrated into the housing of an apparatus rotated for example 45°, such as shown in figure 2, it is possible to read the display without discomfort from a large number of orientations relative to the display. With a display comprising for example 40x40 dots it is possible to display simple a simple set of characters as mentioned above with four different rotation angles relative to the display screen, namely 0°, 90°, 180° and 270°. Being able to select between such four rotations it is possible to obtain a good degree of readability, even without mounting the display unit rotated relative to the apparatus on which is serves as display means.

An alternative to using only one display screen to display two or more sets of characters is to build the display unit by two or more single displays each capable of displaying only one set of characters with one orientation. By orienting each such display screens with a rotation relative to each other, it is possible to improve the readability. For example two display screens each capable of displaying only a set of characters with one orientation may be positioned with a rotation of 180° relative to each other. Three or four such display screens may also be used to form a rotation of substantially 120° or 90° respectively between each other for further improving readability. Using for instance two standard rectangular display screens each capable of displaying a set of characters with one orientation can be combined with a rotation of 180° relative to each other to form a display unit according to the present invention, even without the need for manufacturing a customised display screen such as the ones shown in figure 1-5.

An advantage of using display screens capable of displaying not just a limited number of characters but also high resolution images not being predefined is that such displays offer a freedom to select colour, size and actual shape of each character to be displayed. Among others, display screens using technologies such as OLED, LCD, TFT, CRT, LEP, FED or plasma screens can be produced with such high resolution. Naturally, such display screens have the advantage that, in contrast to the mentioned ones with a predefined set of characters, it is possible to adopt to a completely different application, and it is possible for the end user of a product to modify or redefine a new set of characters - provided that the control features are present.

In relation to the present invention the most interesting feature related to this type of display screen is that it can display a set of characters with any desired orientation relative to the display screen. Thereby these display screen types makes it possible to select a rotation so as to provide an optimal readability no matter how the user is oriented, and especially rotated, in relation to the display unit. Control of such a rotation may be done by turning a knob so as to rotate the display to the desired orientation. Alternatively, a push button may be used for rotating the displayed set of characters when the button is pressed, and once the desired rotation angle has been reached the button is released.

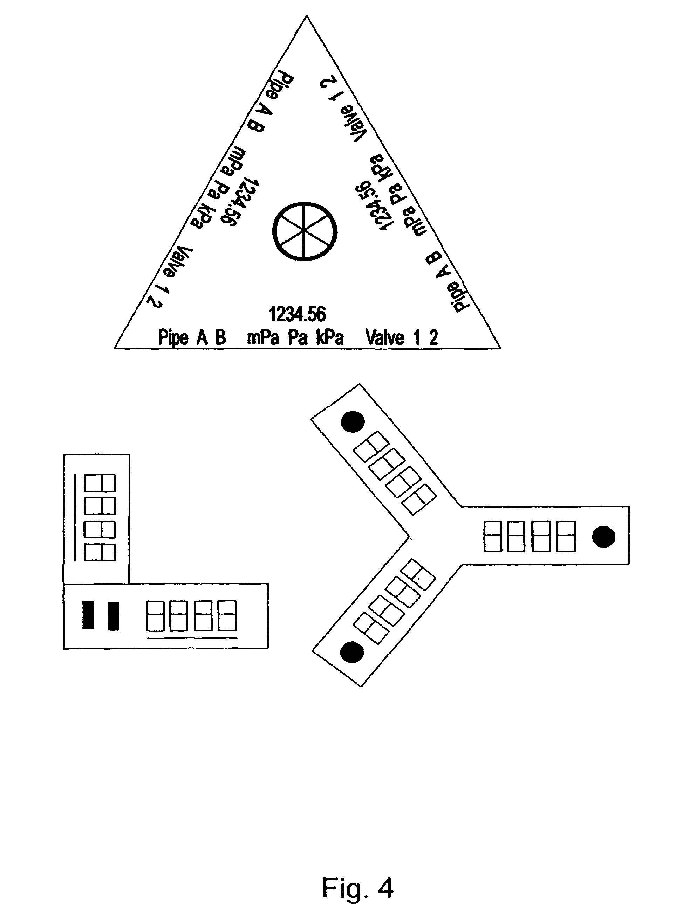

Typically, rectangular display screens are the most common. However other shapes may be advantageous in the light of the present invention, such as circular, triangular or star shapes or even more complicated shapes. With respect to custom designed displays with predefined set of characters a number of shapes may be interesting, such as the three examples shown in figure 4. Especially if more than two different orientations of display messages are preferred shapes other than rectangular may be advantageous. As shown in figure 4 a triangular display is well suited in case of information displayable with three different rotations. The triangular example of figure 4 has in its central part a symbol readable from all orientations which may be used for warnings in case of for instance a measured pressure exceeding a preset value. The L-shaped display screen shown in figure 4 is capable of displaying digits with four possible orientations in steps of 90°, if each of the two regions adapted to display data can display the desired digits upside down. In a similar manner the Y-shaped display screen of figure 4 is prepared for displaying data with an angular resolution of 60°. In addition to saving space for other functions, such displays with shapes other than rectangular may contribute in a positive way to form an individual character of the design of the measurement apparatus.

Depending on the type of measurement apparatus a display unit can occupy a small or large amount of a visible part of a housing of the apparatus. If only a measured figure is to be displayed the display unit may be small compared to the visible part of the housing. However, if a large number of parameters are to be displayed the display unit may occupy a large amount of the visible part of the apparatus, and for some applications it may be preferred that the display occupies the entire visible part of the apparatus housing. This is especially an advantageous embodiment if a touch sensible screen is used as display screen. In such an embodiment it may be possible to entirely operate the apparatus using touch sensible regions of the display screen as operating means. For instance such touch sensible regions of the screen may be used to control the apparatus by means of a hierarchy of menus. Touchable zones on the display screen may also be used to select the desired orientation of the screen.

The solutions according to the present invention for improving readability of a display for presenting measured data on a measurement apparatus are advantageous compared to mechanical methods for rotating a display relative to the measurement apparatus for several reasons. Firstly, it is possible to fully integrate the display unit into the measurement apparatus, since it is not necessary to build in mechanical means for tilting or rotating the display relative to the measurement apparatus. Thus the measurement apparatus can be made less bulky and with a more smooth surface so that it becomes more resistant to dirt and humidity etc. Secondly, the measurement apparatus becomes more reliable and long-term stable since mechanically weak electrical connections are avoided, whereby problems such as broken connectors or bad connections due to moving connecting parts are avoided. Thirdly, the measurement apparatus is suited for low cost production since a lower number of single parts are required.

The solutions according to the present invention can serve as improvements of comfort level for the user of measurement apparatuses. It may also serve as improvement of security in cases where quick and precise reading of instruments measuring critical parameters. With solutions according to the present invention it is easy to quickly "turn" the display, for instance by pushing a button, so that it is possible to read the message on the display and respond quickly thereafter. This is an alternative to the user moving his/her position in order to be able to read the display properly which may be more time consuming. This extra time may be critical, for instance in case of narrow working conditions, and therefore fatal response time may be lost in relation to an important message of a critical measurement parameter.

The principles according to the present invention can of course be used in relation to a large variety of fields where a measurement apparatus - either handheld of mounted fixed - is to be read by a user from different positions thus leaving the user in orientations where it is uncomfortable or even impossible to read the display mounted on the measurement apparatus. The present invention offers solutions so that a display screen integrated with the measurement apparatus can be read also in the situations mentioned. Thus bulky and expensive mechanically complicated display solutions or additional external display can be avoided.

## Claims

1. Measurement apparatus (2) adapted for fixed mounting, the measurement apparatus comprising a display screen (1), the display screen (1) comprising regions for displaying at least a first (11) and a second (12) predefined set of characters representing values measured by the measurement apparatus, the first (11) and the second (12) predefined set of characters being oriented differently relative to the display screen, and having a fixed orientation therebetween, wherein the fixed orientation between the first and second predefined sets of characters is determined at least by a rotation angle α1.

2. Measurement apparatus (2) according to claim 1, wherein α1 is within the interval 150°-210°.

3. Measurement apparatus (2) according to claim 1, wherein α1 is substantially equal to 180°.

4. Measurement apparatus (2) according to claim 1, wherein the display screen further comprises a region for displaying a third predefined set of characters (33) with a fixed orientation relative to the first (31) and the second (32) predefined set of characters, and wherein the third predefined set of characters is rotated an angle α2 relative to the second predefined set of characters.

5. Measurement apparatus (2) according to claim 4, wherein α1 and α2 are within the interval 100°-140°.

6. Measurement apparatus (2) according to claim 5, wherein α1 and α2 are substantially equal to 120°.

7. Measurement apparatus (2) according to claim 4, wherein the display screen further comprises a region for displaying a fourth predefined set of characters (44) with a fixed orientation relative to the first (41), the second (42) and the third predefined set of characters (43), and wherein the fourth predefined set of characters (44) is rotated an angle α3 relative to the third predefined set of characters (43).

8. Measurement apparatus (2) according to claim 7, wherein α1, α2, and α3 are within the interval 70°-110°.

9. Measurement apparatus (2) according to claim 7, wherein α1, α2 and α3 are substantially equal to 90°.

10. Measurement apparatus (2) according to any of claims 1-9, wherein the predefined sets of characters are substantially identical.

11. Measurement apparatus (2) according to any of claims 1-9, wherein the regions for displaying predefined sets of characters spatially overlap.

12. Measurement apparatus (2) according to any of the preceding claims, wherein the display screen is selected from the group consisting of: TFT, CRT, LCD, LED, OLED, LEP, FED and Plasma.

13. Measurement apparatus (2) according to any of the preceding claims, wherein the display screen further comprises at least one touch sensible zone adapted for sensing a user input.

14. Measurement apparatus (2) according to claim 13, wherein the at least one touch sensible zone serves as input for selecting between the at least first (11) or second (12) orientations.

15. Measurement apparatus (2) according to any of the preceding claims adapted to measure flow velocities.

16. Measurement apparatus (2) according to claim 15, wherein the measured flow velocities are used for determination of energy consumption.

17. Measurement apparatus (2) according to claim 16, wherein the energy consumption is heat.

## Patentansprüche

1. Messgerät (2), das zur festen Montage geeignet ist, wobei das Messgerät einen Bildschirm (1) umfasst, der Bildschirm (1) Anzeigebereiche an mindestens einem ersten (11) und einem zweiten (12) vorherbestimmten Zeichensatz umfasst, der durch das Messgerät gemessene Werte zeigt, wobei der erste (11) und der zweite (12) vorherbestimmte Zeichensatz im Verhältnis zum Bildschirm verschieden ausgerichtet sind und dazwischen eine feste Ausrichtung haben, worin die feste Ausrichtung zwischen dem ersten und zweiten vorherbestimmten Zeichensatz mindestens durch einen Drehwinkel α1 bestimmt ist.

2. Messgerät (2) nach Anspruch 1, worin α1 innerhalb eines Bereichs von 150°-210° liegt.

3. Messgerät (2) nach Anspruch 1, worin α1 im wesentlichen gleich 180° ist.

4. Messgerät (2) nach Anspruch 1, worin der Bildschirm weiterhin einen Anzeigebereich für einen dritten vorherbestimmten Zeichensatz (33) mit einer festen Ausrichtung im Verhältnis zum ersten (31) und zweiten (32) vorherbestimmten Zeichensatz umfasst, und worin der dritte vorherbestimmte Zeichensatz in einem Winkel α2 im Verhältnis zum zweiten vorherbestimmten Zeichensatz gedreht ist.

5. Messgerät (2) nach Anspruch 4, worin α1 und α2 innerhalb eines Bereichs von 100°-140° liegt.

6. Messgerät (2) nach Anspruch 5, worin α1 und α2 im wesentlichen gleich 120° sind.

7. Messgerät (2) nach Anspruch 4, worin der Bildschirm weiterhin einen Anzeigebereich für einen vierten vorherbestimmten Zeichensatz (44) mit einer festen Ausrichtung im Verhältnis zum ersten (41), zweiten (42) und dritten vorherbestimmten Zeichensatz umfasst (43), und worin der vierte vorherbestimmte Zeichensatz (44) in einem Winkel α3 im Verhältnis zum dritten vorherbestimmten Zeichensatz (43) gedreht ist.

8. Messgerät (2) nach Anspruch 7, worin α1, α2 und α3 innerhalb eines Bereichs von 70°-110° liegen.

9. Messgerät (2) nach Anspruch 7, worin α1, α2 und α3 im wesentlichen gleich 90° sind.

10. Messgerät (2) nach irgendeinem der Ansprüche 1-9, worin die vorherbestimmten Zeichensätze im wesentlichen identisch sind.

11. Messgerät (2) nach irgendeinem der Ansprüche 1-9, worin sich die Anzeigebereiche für vorherbestimmte Zeichensätze räumlich überlappen.

12. Messgerät (2) nach irgendeinem der vorherbestimmten Ansprüche, worin der Bildschirm aus der Gruppe bestehend aus: TFT, CRT, LCD, LED, OLED, LEP, FED und Plasma gewählt ist.

13. Messgerät (2) nach irgendeinem der vorhergehenden Ansprüche, worin der Bildschirm weiterhin mindestens einen berührungsempfindlichen Bildschirmbereich umfasst, der zur Wahrnehmung einer Nutzereingabe geeignet ist.

14. Messgerät (2) nach Anspruch 13, worin mindestens ein berührungsempfindlicher Bildschirmbereich als Eingabe zur Auswahl zwischen der zumindest ersten (11) oder zweiten (12) Ausrichtung dient.

15. Messgerät (2) nach irgendeinem der vorhergehenden Ansprüche, das zur Messung von Flussgeschwindigkeiten geeignet ist.

16. Messgerät (2) nach Anspruch 15, worin die gemessenen Flussgeschwindigkeiten zur Bestimmung des Energieverbrauchs genutzt wird.

17. Messgerät (2) nach Anspruch 16, worin der Energieverbrauch Hitze ist.

## Revendications

1. Appareil de mesure (2) adapté pour le montage fixe, l'appareil de mesure comprenant un écran d'affichage (1), l'écran d'affichage (1) comprenant des régions pour afficher au moins un premier (11) et un second (12) ensemble de caractères prédéterminé représentant des valeurs mesurées par l'appareil de mesure, le premier (11) et le second (12) ensemble de caractères prédéterminé étant orienté différemment par rapport à l'écran d'affichage, et ayant une orientation fixe entre ces deux points, dans lequel l'orientation fixe entre les premier et second ensembles de caractères prédéterminés est déterminée par au moins un angle de rotation α1,

2. Appareil de mesure (2) selon la revendication 1, dans lequel α1 est dans la plage de 150°-210°.

3. Appareil de mesure (2) selon la revendication 1, dans lequel α1 est essentiellement égal à 180°.

4. Appareil de mesure (2) selon la revendication 1, dans lequel l'écran d'affichage comprend en outre une région d'affichage pour un troisième ensemble de caractères prédéterminé (33) avec une orientation fixe par rapport au premier (31) et au second (32) ensemble de caractères prédéterminé, et dans lequel le troisième ensemble de caractères prédéterminé est tourné dans un angle α2 par rapport au second ensemble de caractères prédéterminé.

5. Appareil de mesure (2) selon la revendication 4, dans lequel α1 et α2 sont dans la plage de 100°-140°.

6. Appareil de mesure (2) selon la revendication 5, dans lequel α1 et α2 sont essentiellement égaux à 120°.

7. Appareil de mesure (2) selon la revendication 4, dans lequel l'écran d'affichage comprend en outre une région d'affichage pour un quatrième ensemble de caractères prédéterminé (44) avec une orientation fixe par rapport au premier (41), au second (42) et au troisième ensemble de caractères prédéterminé (43), et dans lequel le quatrième ensemble de caractères prédéterminé (44) est tourné dans un angle α3 par rapport au troisième ensemble de caractères prédéterminé (43).

8. Appareil de mesure (2) selon la revendication 7, dans lequel α1, α2 et α3 sont dans la plage de 70°-110°.

9. Appareil de mesure (2) selon la revendication 7, dans lequel α1, α2 et α3 sont essentiellement égaux à 90°.

10. Appareil de mesure (2) selon l'une quelconque des revendications 1 à 9, dans lequel les ensembles de caractères prédéterminés sont essentiellement identiques.

11. Appareil de mesure (2) selon l'une quelconque des revendications 1 à 9, dans lequel les régions d'affichage pour les ensembles de caractères prédéterminés se recouvrent spatiellement.

12. Appareil de mesure (2) selon l'une quelconque des revendications précédentes, dans lequel l'écran d'affichage est choisi dans le groupe constitué de: TFT, CRT, LCD, LED, OLED, LEP, FED et Plasma.

13. Appareil de mesure (2) selon l'une quelconque des revendications précédentes, dans lequel l'écran d'affichage comprend en outre au moins une zone de touche à effleurement adaptée à sentir une commande d'un utilisateur.

14. Appareil de mesure (2) selon la revendication 13, dans lequel la au moins une zone de touche à effleurement sert comme une commande pour choisir entre la au moins première (11) ou seconde (12) orientation.

15. Appareil de mesure (2) selon l'une quelconque des revendications précédentes adapté à mesurer des vitesses d'écoulement.

16. Appareil de mesure (2) selon la revendication 15, dans lequel les vitesses d'écoulement sont utilisées pour la détermination de la consommation d'énergie.

17. Appareil de mesure (2) selon la revendication 16, dans lequel la consommation d'énergie est la chaleur.
